Europäisches Patentamt

European Patent Office

Office européen des brevets

(11) Veröffentlichungsnummer : **0 205 769**
**B1**

(12) **EUROPÄISCHE PATENTSCHRIFT**

(45) Veröffentlichungstag der Patentschrift :
30.11.88

(21) Anmeldenummer : 86103902.2

(22) Anmeldetag : 21.03.86

(51) Int. Cl.⁴ : **C 08 L 95/00**, **C 10 C 3/00**,
**D 06 N 5/00**// C08L21/00,
C08L23/00

(54) **Verfahren zur Herstellung einer bituminösen Masse und ihre Verwendung.**

(30) Priorität : 15.06.85 DE 3521596

(43) Veröffentlichungstag der Anmeldung :
30.12.86 Patentblatt 86/52

(45) Bekanntmachung des Hinweises auf die Patenterteilung : 30.11.88 Patentblatt 88/48

(84) Benannte Vertragsstaaten :
**BE DE FR GB IT NL**

(56) Entgegenhaltungen :
**EP-A- 0 009 432**
**BE-A- 733 935**
**US-A- 2 847 359**

(73) Patentinhaber : **RÜTGERSWERKE AKTIENGESELLS-CHAFT**
**Mainzer Landstrasse 217**
**D-6000 Frankfurt am Main 1 (DE)**

(72) Erfinder : **Omran, Jafar, Dr.**
**Ahornstrasse 25**
**D-4620 Castrop-Rauxel (DE)**
Erfinder : **Rühl, Karl, Dr.**
**Hochwaldstrasse 13**
**D-6350 Bad Nauheim (DE)**
Erfinder : **Zander, Maximilian, Prof. Dr.**
**Friedenstrasse 9**
**D-4620 Castrop-Rauxel (DE)**

**Beschreibung**

Die Erfindung betrifft die Herstellung einer mit Kunststoffen modifizierten bituminösen Masse und ihre Verwendung zur Herstellung von Bauwerksabdichtungen, insbesondere von Dachdichtungsbahnen.

Bitumen wird im allgemeinen aus den Rückständen der Rohöldestillation hergestellt. Es enthält je nach Art des Rohöls unterschiedliche Mengen an paraffinischen, naphthenischen und aromatischen Bestandteilen und zeigt entsprechend seiner Zusammensetzung jeweils ein unterschiedliches chemisches Verhalten. So ist nicht jeder Rohölrückstand für die Bitumen-Herstellung geeignet.

Je nach Destillationsgrad werden mehr oder weniger harte Bitumina mit unterschiedlichen physikalischen Eigenschaften erhalten. Besonders harte Bitumina werden bei der Hochvakuum-Destillation durch Abtrennen hochsiedender Zylinderöle gewonnen. Eine andere Möglichkeit, aus weichem Destillationsbitumen härtere Bitumentypen zu erzeugen, ist das Verblasen mit Luft, gegebenenfalls unter Verwendung von Katalysatoren. Das so hergestellte geblasene Bitumen hat gegenüber einem vergleichbaren Destillationsbitumen eine höhere Elastizität. Außerdem läßt sich Bitumen durch selektive Fällungsreaktionen aus Erdölfraktionen gewinnen. So fällt beispielsweise bei der Propan-Extraktion zur Herstellung hochwertiger Schmieröle ein Extraktionsbitumen als Nebenprodukt an. Alle diese unterschiedlichen Bitumentypen sind heute auf dem Markt vorhanden.

Ebenso vielfältig wie die Bitumentypen sind auch ihre Verwendungsmöglichkeiten als Bindemittel oder Dichtungs- und Isoliermittel im Bauwesen. Das von den Raffinerien gelieferte Bitumen kann jedoch heute nur noch in wenigen Fällen ohne vorherige Aufarbeitung direkt als Baustoff verwendet werden. Infolge der gestiegenen Anforderungen werden die Bitumina daher durch Zusätze von Füllstoffen, Weichmachern und Kunststoffen modifiziert.

Wegen der ständig gestiegenen Rohölpreise werden in den Raffinerien die Rohöldestillationsrückstände mehr und mehr Spaltprozessen unterworfen, um durch eine höhere Ölausbeute das Aufarbeitungsverfahren wirtschaftlicher zu gestalten. Als Rückstände fallen dabei sogenannte Krackteere an, die wegen ihrer Temperatur- und Sauerstoffempfindlichkeit (Abraham : Asphalts and allied Substances, Vol. 2, 6th Ed., Seite 163) nicht für die Bitumen-Herstellung geeignet sind. So werden beispiels- weise Visbreaker-Rückstände als schweres Heizöl genutzt, dessen Viskosität durch Zumischen von Mitteldestillaten eingestellt werden kann (Ullmanns Encyklopädie der technischen Chemie, 4. Auflage, Band 10, Seite 668).

Da für die Bitumen-Herstellung geeignete preiswerte Rohstoffe in immer geringerem Maße zur Verfügung stehen, bestand die Aufgabe, die Rohstoffbasis zu erweitern und aus bisher für diese Zwecke nicht verwendeten mineralölstämmigen Rückständen bituminöse Massen zu entwickeln und geeignete Verwendungsmöglichkeiten bei der Herstellung von Bauwerksabdichtungen für diese Massen zu finden.

Die Aufgabe wird erfindungsgemäß dadurch gelöst, daß einem Rückstand, erhältlich aus dem Visbreaking-Prozeß beim Einsatz von überwiegend paraffinisch-naphthenischen Rohöldestillationsrückständen, mit einem Flammpunkt oberhalb 250 °C, einem Erweichungspunkt (Ring und Kugel) von 25 bis 65 °C, einer Penetration von maximal 300 · 1/10 mm und einem Siedebeginn von 340 bis 550 °C, bei einer Temperatur im Bereich von 120 bis 190 °C 2,5 bis 40 Gew.-% — bezogen auf die gesamte Masse — eines natürlichen oder synthetischen Kautschuks, eines Polyolefins oder eines Gemisches aus diesen Stoffen homogen zugemischt wird, wobei die Masse gegebenenfalls durch Zusätze modifiziert wird.

Visbreaker-Rückstände sind in hohem Maße temperaturempfindlich und wenig oxidationsbeständig. Sie zeigen daher keine für die Verwendung als Bitumen für Bauwerksabdichtungen ausreichende Alterungsbeständigkeit (Fuel, 1984, Vol. 63, Seiten 1515-1517). Es war daher überraschend, daß die erfindungsgemäß hergestellte Masse selbst bei einer Temperatur von 180 °C unter ständiger Bewegung in Gegenwart von Luft nur eine Zunahme des Erweichungspunktes und eine Verminderung der Penetration aufwies, die etwa in der gleichen Größenordnung lagen wie bei einem vergleichbaren Destillationsbitumen. Die Alterungsbeständigkeit dieser Masse entspricht also der eines vergleichbaren Destillationsbitumens.

Vorzugsweise werden Visbreaker-Rückstände mit einem Erweichungspunkt (Ring und Kugel) von etwa 40 °C und einem Siedebeginn von etwa 480 °C verwendet. Diese Rückstände haben eine Penetration von etwa 210 · 1/10 mm. Sie besitzen selbst keine ausreichende Elastizität, erhalten aber durch das Zumischen von 2,5 bis 5 Gew.-% Kautschuk bereits Eigenschaften, die denen reiner Bitumenmassen oder entsprechender Bitumen-Kautschuk-Massen überlegen sind.

Für Polymerzusätze über 15 Gew.-% werden vorzugsweise Visbreaker-Rückstände mit einem Erweichungspunkt (R. u. K.) von weniger als 40 °C verwendet. Die Verarbeitbarkeit wird dadurch verbessert. Die Verwendung von Visbreaker Rückständen mit einem Erweichungspunkt (R. u. K.) von mehr als 65 °C ist nur möglich, wenn zusätzlich Weichmacher wie beispielsweise Gasöle aus der Vakuumdestillation des Visbreakers zugegeben werden.

Als Kautschuk können alle festen unvulkanisierten Naturkautschuke ebenso verwendet werden wie die Synthesekautschuke, also Styrol-Butadien-Mischpolymerisate, Butadien-Acrylnitril-Mischpolymerisate, Polyisopren, Polybutadien, Ethylen-Propylen-Kautschuk, Polyurethan-Kautschuk usw. und Kautschukderivate wie Cyclokautschuk. Bevorzugt werden Styrol-Butadien Kautschuke mit den Visbreaker-Rückständen gemischt.

Als Polyolefine werden Polyethylen, Polypropylen, Polyisobutylen und Ethylencopolymerisate eingesetzt, vorzugsweise jedoch Polyethylenabfälle.

Die Eigenschaften der erfindungsgemäß hergestellten Masse lassen sich in an sich bekannter Weise durch den Zusatz von weiteren Polymeren wie Kohlenwasserstoffharze (z. B. Cumaron-Inden-Harz), Polyvinylchlorid, Natur- harze (z. B. Montanharz und Kolophonium), polymere Acrylate und Methacrylate, Polyadditionsverbindungen (z. B. Polyurethane und Epoxidharze) und Polykonden- sationsprodukte (z. B. Polyamide, Phenolharze und Polyester) variieren. Da nicht alle diese Polymere in aliphatischen Kohlenwasserstoffen löslich sind, müssen gegebenenfalls aromatische Öle als Weichmacher zugesetzt werden.

Je nach Verwendungzweck kann die bituminöse Masse auch durch den Zusatz von Füllstoffen modifiziert werden. Als Füllstoffe können neben Gesteinsmehlen wie Schiefermehl, Kaolin und Talkum auch anorganische und organische Fasern verwendet werden.

Die Erfindung wird anhand der nachfolgenden Beispiele näher erläutert, ohne darauf beschränkt zu sein.

Beispiel 1

82 Gew. -Teile eines Visbreaker-Rückstandes mit einem Erweichungspunkt EP (Ring und Kugel) von 27 °C, einer Penetration von 300 · 1/10 mm, einem Flammpunkt von 292 °C, einem Siedebeginn von 345 °C und einem Verhältnis Paraffine/Naphthene von 50/50 wird bei 180 °C mit 18 Gew.-Teilen eines Styrol-Butadien-Kautschuks (Finaprene 411 P) in einem Rührkessel homogen gemischt. Die Mischzeit beträgt 90 min. Die erhaltene bituminöse Masse ist durch folgende Parameter gekennzeichnet :

EP (R. u. K.) 119 °C
Penetration 46 · 1/10 mm

Beispiel 2

60 Gew.-Teile eines Visbreaker-Rückstandes wie in Beispiel 1 wird bei 170 °C mit 40 Gew.-Teilen Polypropylen (Vispol 2000/Typ C) homogen gemischt. Die Mischzeit beträgt 80 min. Die bituminöse Masse hat folgende physikalischen Eigenschaften :

EP (R. u. K.) 153 °C
Penetration 46 · 1/10 mm

Beispiel 3

88 Gew.-Teile eines Visbreaker-Rückstandes mit einem EP (R. u. K.) von 36 °C, einer Penetration von 288.1/10 mm, einem Flammpunkt von 294 °C, Siedebeginn von 370 °C und einem Verhältnis Paraffine/Naphthene von 70/30 wird bei 150 °C mit 12 Gew.-Teilen Polyethylen-Regenerat (Plastikwerke Nordwalde) verrührt. Die Rührzeit beträgt 70 min. Die erhaltene bituminöse Masse ist durch folgende Parameter gekennzeichnet :

EP (R. u. K.) 106 °C
Penetration 51 · 1/10 mm

Beispiel 4

97 Gew.-Teile Visbreaker-Rückstand mit einem EP (R. u. K.) von 40 °C, einer Penetration von 208 · 1/10 mm und einem Siedebeginn von 480 °C und einem Verhältnis Paraffine/Naphthene von 30/70 wird bei 120 °C 90 min lang im Rührkessel mit 3 Gew.-Teilen eines Styrol-Butadien-Kautschuks wie im Beispiel 1 gemischt. Anschließend werden 67 Gew.-Teile Schiefermehl in die Masse eingerührt. Diese mit Füllstoffen modifizierte Masse hat folgende Eigenschaften :

EP (R. u. K.) 85 °C
Penetration 44 · 1/10 mm

Beispiel 5 (Vergleich)

Zum Vergleich wird das Beispiel 4 wiederholt, wobei der Visbreaker-Rückstand durch Bitumen B 200 ersetzt wird. Die so erhaltene Masse zeigte folgende Eigenschaften :

EP (R. u. K.) 62 °C
Penetration 74 · 1/10 mm

Obwohl die Penetration und der Erweichungspunkt des Visbreaker-Rückstandes im Beispiel 4 den Meßwerten eines Bitumens B 200 entsprechen, weichen die Eigenschaften der fertigen Massen bei sonst gleicher Rezeptur und Behandlung stark voneinander ab. Werden aus beiden Massen etwa 5 mm starke Probestreifen gegossen, so wird bei der Vergleichsmasse nach Beispiel 5 eine Entmischung der Komponenten beobachtet. Aus der Masse nach Beispiel 4 hingegen wird ein völlig homogener Probestreifen erhalten, der bei Raumtemperatur flexibel ist und bei Verformung ein hohes Rückstellvermögen zeigt.

Die erfindungsgemäß hergestellte bituminöse Masse eignet sich insbesondere zur Imprägnierung von Verstärkungseinlagen in Dachdichtungsbahnen. Als Verstärkungseinlagen können Gewebe und Vliese aus organischen und anorganischen Fasern wie Glasgewebe, Glasvliese, Rohfilzpappen, Polyestergewebe und Polyestervliese sowie Jutegewebe verwendet werden. Normalerweise werden für die Imprägnierung die Bitumensorten B 200, B 80 und B 65 verwendet (Bitumen und Asphalt, Seite 95). Die Imprägnierung erfolgt bei Temperaturen im Bereich von 180 bis 200 °C (Bitumen und Asphalt, Seite 98). Wegen der geringen Viskosität der erfindungsgemäß hergestellten bituminösen Massen kann die Imprägnierung bei niedrigeren Temperaturen als 180 °C durchgeführt werden, vorzugsweise in einem Bereich von 130 bis 150 °C. Dies hat nicht nur den Vorteil, daß das Imprägnierverfahren energiegünstiger ausgeführt werden kann. Es wird außerdem bei Einlagen aus Kunststoffasern wie z. B. Polyesterfasern ein Schrumpfen der Fasern vermieden.

Beispiel 6

95,5 Gew.-Teile eines Visbreaker-Rückstandes wie im Beispiel 4 werden bei 150 °C mit 4,5 Gew. Teilen Styrol-Butadien-Kautschuk (Finaprene 411 P) gemischt und ein genadeltes Polyestervlies (265 g/m²) mit dieser bituminösen Masse durch Tränken in einer üblichen Dachbahnenanlage bei 145 °C imprägniert. Die Masse hatte einen Erweichungspunkt von EP (R. u. K.) = 94 °C und eine Viskosität nach DIN 52023 Blatt 1 bei 130 °C von 70 mPa · s. Das Vlies wurde mit einer Menge von 1046 g/m² der bituminösen Masse imprägniert. Eine daraus hergestellte Dachbahn zeigte überraschenderweise nach einer 40-tägigen Lagerung im Wasser keine Wasseraufnahme im Gegensatz zu üblichen Dachbahnen mit bitumenimprägnierter Verstärkungseinlage. Als Ursache hierfür werden das günstigere Viskositätsverhalten und bessere Benetzungseigenschaften angesehen.

Beispiel 7

Ein Glasgewebe G 200 (Qualität 94032 Basaltvlies Weisenau/195 g/m²) wird bei 140 °C mit 248 g/m² der gleichen bituminösen Masse wie im Beispiel 6 imprägniert. Eine daraus hergestellte Dachbahn zeigte nach 40-tägiger Wasserlagerung keine Wasseraufnahme. Übliche Dachbahnen hingegen zeigen bereits nach einstündiger Wasserlagerung eine zum Teil erhebliche Wasseraufnahme. (Bitumen, 1983, Seiten 32 und 33).

Da die Wasseraufnahme ein ausgezeichnetes Indiz für die Güte der Imprägnierung ist, folgt aus diesem Test, daß die erfindungsgemäß hergestellte Masse die für die Verwendung als Tränkmasse bei der Herstellung bituminöser Dachdichtungsbahnen geforderten Eigen- schaften in hervorragender Weise erfüllt.

Patentansprüche

1. Verfahren zur Herstellung einer bituminösen, mit Kunststoffen modifizierten Masse, dadurch gekennzeichnet, daß einem Rückstand, erhältlich aus dem Visbreaking-Prozeß beim Einsatz von überwiegend paraffinisch-naphthenischen Rohöldestillationsrückständen, mit einem Flammpunkt oberhalb 250 °C, einem Erweichungspunkt (Ring und Kugel) von 25 bis 65 °C, einer Penetration von maximal 300 · 1/10 mm und einem Siedebeginn von 340 bis 550 °C, bei einer Temperatur im Bereich von 120 bis 190 °C 2,5 bis 40 Gew.-% — bezogen auf die gesamte Masse — eines natürlichen oder synthetischen Kautschuks, eines Polyolefins oder eines Gemisches aus diesen Stoffen homogen zugemischt werden, wobei die Masse gegebenenfalls durch Zusätze modifiziert wird.

2. Verfahren nach Anspruch 1, dadurch gekennzeichnet, daß der Visbreaker-Rückstand einen Erweichungspunkt von etwa 40 °C und einen Siedebeginn von etwa 480 °C hat.

3. Verfahren nach den Ansprüchen 1 und 2, dadurch gekennzeichnet, daß dem Visbreaker-Rückstand 2,5 bis 5 Gew.-% — bezogen auf die gesamte Masse — eines Styrol-Butadien-Kautschuks zugemischt wird.

4. Verfahren nach den Ansprüchen 1 und 2, dadurch gekennzeichnet, daß der Masse bis zu 12 Gew.-% — bezogen auf die gesamte Masse — Polyethylenabfälle zugemischt werden.

5. Verwendung der bituminösen Masse nach den Ansprüchen 1 bis 4 als Tränkmasse zur Imprägnierung von Verstärkungseinlagen für bituminöse Dachdichtungsbahnen bei Temperaturen unterhalb von 180 °C.

6. Verwendung der bituminösen Masse nach den Ansprüchen 1 bis 4 als Tränkungsmasse zur Imprägnierung von Glasfaser- und Polyesterfaservliesen im Temperaturbereich von 130 bis 150 °C.

**Claims**

1. A process for making a bituminous stock modified with plastics materials, characterized in that 2.5 to 40 % by weight — relative to the whole stock — of a natural or synthetic rubber, a polyolefin or a mixture of these substances is homogeneously mixed at a temperature in the range of 120 to 190 °C with residue obtainable from the Visbreaking process using predominantly paraffin-naphthenic crude oil distillation residues, and having a flash point above 250 °C, a softening point (ring and ball) of from 25 to 65 °C, a maximum penetration of 300 x 1/10 mm and a boiling point of from 340 to 550 °C, the stock being modified where appropriate by additives.

2. A process according to Claim 1, characterized in that the Visbreaker residue has a softening point of approximately 40 °C and a boiling point of approximately 480 °C.

3. A process according to Claims 1 and 2, characterized in that 2.5 to 5 % by weight — relative to the whole stock — of a styrenebutadiene rubber is mixed with the Visbreaker residue.

4. A process according to Claims 1 and 2, characterized in that up to 12 % by weight — relative to the whole stock — of polyethylene waste is mixed with the stock.

5. The use of the bituminous stock according to Claims 1 to 4 as an impregnating compound for impregnating reinforcement inlays for bituminous roof-sealing courses at temperatures below 180 °C.

6. The use of the bituminous stock according to Claims 1 to 4 as an impregnating compound for impregnating glass-fibre and polyester-fibre fleeces in the temperature range of from 130 to 150 °C.

## Revendications

1. Procédé de préparation d'une masse bitumineuse modifiée par des matières synthétiques, caractérisé en ce que l'on incorpore de façon homogène par mélange à un résidu que l'on peut obtenir à partir de l'opération de viscoréduction mettant essentiellement en jeu des résidus de distillation de brut paraffiniques-naphténiques ayant un point d'inflammation supérieur à 250 °C, un point de ramollissement (anneau et bille) de 25 à 65 °C, une pénétration maximale de 300 · 1/10 mm et un début d'ébullition de 340 à 550 °C, à une température dans la plage de 120 à 190 °C, 2,5 à 40 % en poids, par rapport à la masse totale, d'un caoutchouc naturel ou synthétique, d'une polyoléfine ou d'un mélange de ces produits, la masse étant éventuellement modifiée par des additifs.

2. Procédé selon la revendication 1, caractérisé en ce que le résidu de viscoréducteur possède un point de ramollissement d'environ 40 °C et un début d'ébullition d'environ 480 °C.

3. Procédé selon les revendications 1 et 2, caractérisé en ce qu'on ajoute par mélange au résidu de viscoréducteur 2,5 à 5 % en poids — rapportés à la masse totale — d'un caoutchouc de styrène-butadiène.

4. Procédé selon les revendications 1 et 2, caractérisé en ce qu'on ajoute par mélange à la masse jusqu'à 12 % en poids — rapportés à la masse totale — de déchets de polyéthylène.

5. Utilisation de la masse bitumineuse selon les revendications 1 à 4 en tant que matière d'imprégnation pour l'imprégnation de renforts pour des panneaux d'étanchéité bitumineux pour toitures à des températures inférieures à 180 °C.

6. Utilisation de la masse bitumineuse selon les revendications 1 à 4 en tant que matière d'imprégnation pour l'imprégnation de mats de fibres de verre et de fibres de polyester dans la gamme de températures de 130 à 150 °C.